# EUROPEAN PATENT SPECIFICATION

(11) **EP 0 414 624 B1**
(45) Date of publication and mention of the grant of the patent: **18.12.1996**
(21) Application number: 90480100.8
(22) Date of filing: 05.07.1990
(51) Int. Cl.: G06F 9/46

(54) **System for calling procedures on a remote network node**
System für den Aufruf von Prozeduren von einem Fernnetzwerkknotenpunkt
Système pour l'appel des procédures sur un noeud de réseau à distance

(30) Priority: 24.08.1989 US 398126
(43) Date of publication of application: 27.02.1991
(73) Proprietor: International Business Machines Corporation, Armonk, N.Y. 10504 (US)
(72) Inventor: Brandle, Richard T., Dallas TX 75287-7236 (US); Goodliffe, Don L., Dunwoody, GA 30338 (US); Keith, Donald E., Peachtree City, GA 30269 (US); Robinette, Randy A., Acworth, GA 30101 (US); Sizemore, Robert C., Acworth, GA 30101 (US); Smithwick, Garry J., 7036 Schoenaich (DE); Zappavigna, Antony J., Marietta, GA 30062 (US)
(74) Representative: Bonneau, Gérard

(56) References cited:
- EP-A- 0 138 352
- EP-A- 0 178 235
- ACM TRANSACTIONS ON COMPUTER SYSTEMS. vol. 2, no. 1, February 1984, NEW YORK US pages 39 - 59; A.D. BIRRELL ET AL.: 'Implementing remote procedure calls'
- COMPSAC 87 7 October 1987, TOKYO JP pages 687 - 693; K.B. SHEETS ET AL.: 'A kernel level remote procedure call mechanism'
- COMMUNICATIONS OF THE ASSOCIATION FOR COMPUTING MACHINERY. vol. 30, no. 2, February 1987, NEW YORK US pages 132 - 140; D. NOTKIN ET AL.: 'Heterogeneous computing environments: report on the ACM sigops workshop on accomodating heterogeneity'

## Description

The present invention relates generally to computer systems, and more specifically to techniques for calling procedures on a remote network node from a local node.

Programming languages provide facilities for making procedure calls, whereby code which is reusable can be placed in a defined location and executed when needed. Parameters can be passed to called procedures, and results returned. As used herein, the term procedure will be used in a generic sense; program segments which are referred to in particular instances as procedures, functions, and subroutines will all be referred to herein as procedures.

Details of procedure calling conventions differ with different programming languages. Some parameters may be passed in registers, on a procedure stack, or in memory blocks pointed to by pointers held in a register or a stack location. Because of different calling conventions used by different languages, procedure calls must be made to procedures originally written in the same language, or another language using the same calling conventions. If it is desired to make a call to a procedure originally written in a different language, and the identity of the original language is known, special steps can sometimes be taken to restructure the call to function correctly with such procedure. This restructuring usually requires modification of the call at the assembly language level.

In many computer systems, including virtually all large and medium size systems, common libraries of procedures are maintained for standard and often used functions. These procedures, sometimes referred to as system services are called from application programs, freeing an applications programmer from writing and debugging code to perform common functions. Library functions can be linked to an application program at link time, or they may be dynamically linked at execution time if this is supported by the operating system.

The language calling convention problem described above exists with the use of procedure libraries. A library procedure must typically be written in each language supported by the system, so that multiple procedures exist for performing the same library function. An alternative is to have one or a limited number of procedures written in a particular language, and require applications programmers to perform whatever steps are necessary in order to call procedures written in different languages.

When several computer systems are connected together through a non-homogeneous network, procedure calling conventions can differ between different system architectures. Communications of the ACM, Vol. 30, n°2, Feb. 1987 gives a detailed overview on heterogeneous computing environments.

Further, the ability for applications programs to call library procedures located on remote nodes attached to a network has been dealt with in ACM Transactions on Computer Systems, Vol. 2, n°1; Feb. 1984. It would be desirable for such a system to allow the applications programs to call library procedures without knowing whether they are located on the local network node or on a remote node.

It is therefore an object of the present invention to provide such a system and method which allows applications programs to make calls to library procedures without knowing whether such library procedures are located on the local machine or a remote machine.

According to the present invention, a system for making calls to library procedures provides a standard interface for applications programs. Requests for library procedures are checked to see if the desired procedure is available locally or on a remote machine. Locally available procedures are performed locally. Procedures which are available on remote machines are invoked by communicating a procedure identifier and any necessary parameters to the remote machine. Results are returned to the local machine for use by the applications program.

The novel features believed characteristic of the invention are set forth in the appended claims. The invention itself however, as well as a preferred mode of use, and further objects and advantages thereof, will best be understood by reference to the following detailed description of an illustrative embodiment when read in conjunction with the accompanying drawings, wherein:
Figure 1 is a block diagram of a system for calling library procedures on a local machine;
Figure 2 is a diagram illustrating a format for calling library routines;
Figure 3 is a flowchart illustrating steps taken to call a library procedure on a local machine;
Figure 4 is a block diagram of a system for calling library procedures on a remote machine;
Figure 5 is a flowchart illustrating steps taken to make a synchronous call to a library procedure on a remote machine;
Figure 6 is a flowchart illustrating steps taken to make an asynchronous call to a library procedure on a remote machine;
Figure 7 is a flowchart illustrating steps taken to initiate a communications link for a series of calls to library procedures on a remote machine; and
Figure 8 is a flowchart illustrating steps taken to terminate a communications link for a series of calls to library procedures on a remote machine.

The system described herein is suitable for use with nearly any general purpose digital computer. Mainframes, minicomputers, engineering workstations, and many desktop personal computers can support the system described below. Only minor modifications, within the ability of those skilled in the art, are needed for various existing language compilers as will be described below.

The terms library procedures, services and service procedures are used synonymously. Local node and local machine mean the computer on which an applications program is executing. Remote node and remote machine mean a computer which is connected to the local node by a communications link, such as a local area network.

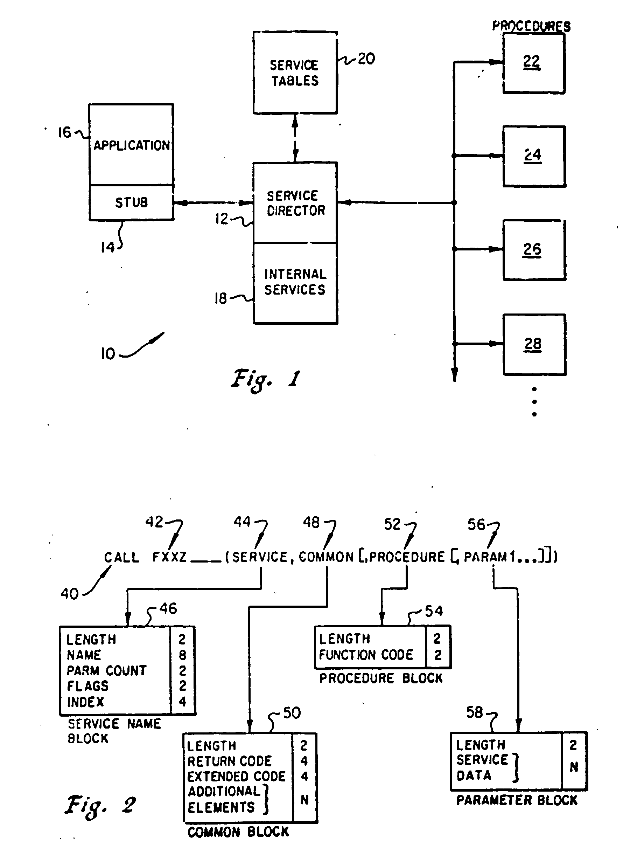

Referring to Figure 1, a system 10 for handling library procedure calls which are available on the local node includes a service director 12. The service director 12 is a software procedure which is called by a stub procedure 14. The stub procedure 14 is part of an application program 16.

The service director 12 contains several procedures which define internal services 18. The service director 12 also has access to data structures which define service tables 20. While executing, the service director 12 can make procedure calls to library procedures 22, 24, 26, and 28.

The application program 16 can perform any end use or system function, and is typically written in a high level language such as C or COBOL. Decreasingly, the application 16 may be written in assembly language. The stub procedure 14 is a small procedure which is linked to the application 16 at link time.

The stub procedure 14 is called in the manner of any other procedure by the application 16. Parameters passed to the stub procedure 14 describe a system library procedure, or service, which execution is desired. The stub procedure 14 uses these parameters to make a procedure call to the service director 12.

Since different programming languages use different procedure calling conventions, a different stub procedure 14 must be provided by the system for each programming language supported. However, a single stub program 14 makes all calls to the service director 12 for all desired library services.

The service director 12 is the interface used by application programs 16 when library procedures are called. The service director 12, when called, examines the parameters passed to it and determines which library procedure is to be invoked. Certain procedures are preferably included directly in the code of the service director 12. These procedures can be referred to as internal services 18, or environmental services. These procedures 18 are typically those which are executed often, and are not of great complexity. Efficient calls to these procedures 18 are preferred in order to prevent system performance degradation. Typical system services which can be included as internal services 18 to the service director 12 include program and storage management, time of day and similar systems services, and initialization and control routines directed toward operation of the service director 12 itself.

When an application 16, through the stub 14, calls the service director 12, a procedure to be performed is identified by parameters passed thereto. Once the desired procedure is identified, the service director must determine where the procedure is stored in the system, what parameters it requires, and the language the procedure was originally written in. This last item indicates the procedure calling convention which must be used when the desired library procedure is invoked. The service director 12 finds this information from the service tables 20. The service tables 20 are data structures which provide a mapping from the names of system library procedures to the information just described, and can be implemented in any of several well known data structures.

Once the service director 12 has identified the library procedure to be invoked, it arranges any parameters to be passed thereto appropriately for the calling convention expected by the procedure, and then calls it. Any results returned by the procedure are passed to the service director 12. If necessary, the service director 12 reformats the results, and returns them to the stub procedure 14.

In many instances, an application program 16 and a called library procedure will be written in the same language, so that little difficulty is encountered in making the required procedure calls. In other cases, an implementation of one language may pass parameters and return results in registers, while an implementation of another language could use a stack. The service director 12 "knows" what is necessary to translate between one calling convention and another, and makes these changes in a fairly straight forward manner. For example, data and pointers can be moved from registers to a stack, and vice versa.

In a preferred embodiment, an application must make an initialization call to the service director 12 prior to invoking any system library procedures. This call passes parameters which identify the application, and allow the service director 12 to locate the appropriate service tables 20. Different applications may use different sets of service tables. This call can also provide a pointer to a common control block who's function will be described in connection with Figure 2.

It is also preferable for the application 16 to make a termination call to the service director 12 after all calls to library procedures are completed. This allows the service director 12 to free allocated areas of memory, and generally clean up after the application 16.

Figure 2 illustrates a typical command for use within the application 16 for invoking a library procedure. A command line 40 is a call to a stub procedure 14 having a stub procedure name 42. In some languages, such as FORTRAN, the word CALL actually appears as part of the statement invoking the stub procedure 14. In many other languages, the word CALL is not used, and the stub procedure 14 is invoked merely by using its name 42.

The stub procedure name 42 is preferably relatively arbitrary, so that it tends to not conflict with the use of descriptive procedure names. In order that a system linker will be able to link in the stub 14 appropriate to the language of the application program 16, the stub procedure name 42 indicates which language is being used. In Figure 2, a _ is shown, and this _ is preferably replaced by one or more characters indicating the language being used. For example, these characters could be "C", "CBL" (for COBOL), or "ASM" (for assembly language). In the alternative, the same stub procedure name is used for all languages, and each compiler identifies the appropriate stub procedure 14 by placing the necessary external linkage information in the object file it creates when it compiles the application program 16.

The first parameter passed to the stub procedure 14 is a service parameter 44, which is a pointer to a data structure called a service name block 46. The second parameter to be passed is a common block identifier 48, which contains a pointer to a common block 50. The third parameter 52 is a pointer to a procedure block 54, and additional parameters 56 are each pointers to separate parameter blocks 58.

The parameters 52 and 56, shown in square brackets, are optional in some cases. That is, some internal service calls, such as time of day, may require only the parameters 44 and 48, depending upon implementation.

The service parameter 44 points to the service name block 46, which is an allocated block of memory containing several different items of information. The numbers shown in block 46 indicate a number of bytes which that field occupies. In the preferred embodiment, the first field in the service name block 46 is a LENGTH field, which indicates the total number of bytes in the service name block 46. The next field is a NAME field, which is the name of a service. A PARM COUNT field indicates the number of parameters which are to be passed to the called service. This count is used to determine whether a procedure parameter 52 is being passed, and how many parameter items 56 are being passed.

A FLAGS field is used to pass information from the stub procedure 14 to the service director 12. One type of information typically passed is the identity of the calling language. All of the stub procedures 14 for different languages call the service director 12 at the same entry point, and the FLAGS field in the service name block indicates to the service director 12 which calling convention is being used.

The INDEX field is used to more quickly identify the location of information about a particular service. The first time a service is invoked, the service director 12 must search through the service tables 20 in order to match the NAME field with the various names available in the tables 20. Once this match has been made, the service director 12 places an identifier for that entry in the tables 20 into the INDEX field. The identifier can be, for example, an address for that entry, or an index into a table. Whenever various functions of this service are called in the future, this identifier is used to access the appropriate entry in the service tables 20 directly.

The common block 50 is used by the service director 12 to return status and other information to the application program 16. A LENGTH field indicates the size of the common block 50. A RETURN CODE field is used to return status codes to the application program 16. By convention in a preferred embodiment, a positive value for the return code simply passes through any return code generated by the called library procedure. Also by convention, a negative value for a return code is used by the service director 12 to indicate a failure within its area of responsibility. Such failures could include, for example, the inability to locate a desired library procedure. The EXTENDED CODE field provides an additional ability to return error codes.

The ADDITIONAL ELEMENTS fields are optional, and may be used to transfer data or pointers to data back to the application program 16.

In addition to the LENGTH field, the procedure block 54 includes a FUNCTION CODE field. This field is a number indicating which function of a service is desired.

In a preferred embodiment, it is anticipated that related functions will be grouped together, and this grouping is called the service. In order to access one of these procedures, a name applied to the service as a whole is required, and is found in the service name block 46, and an indication of which procedure within the service is requested is found in the procedure block 54. For example, a group of routines for performing matrix manipulation can be identified by a single service, with the procedure block 54 indicating whether calculation of a determinant, matrix multiplication, inversion, or other matrix manipulations are requested.

Each parameter block 58 is used to transmit one parameter to the requested library procedure. The SERVICE DATA field in the parameter block 58 can contain the data directly, or can contain a pointer to the data. The type of data contained in each parameter block 58 is dependent upon what each individual library procedure expects, and will be specified in the documentation for that particular library procedure.

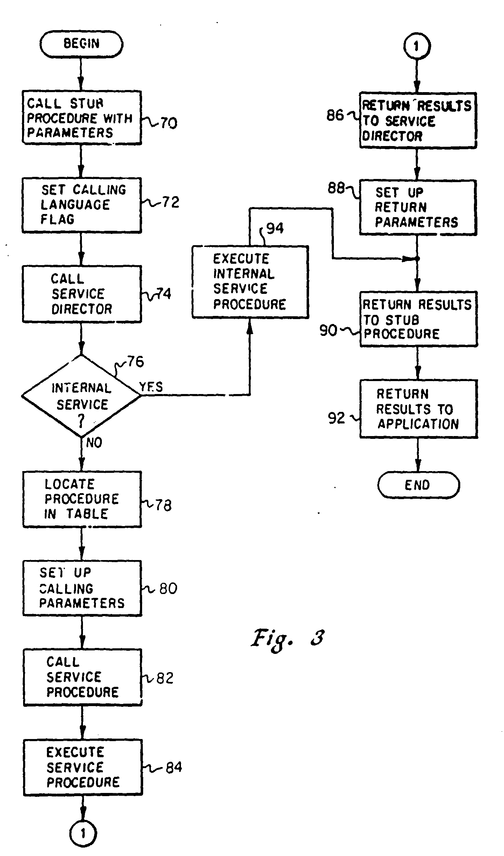

Figure 3 illustrates the steps which occur during a call of a library procedure, which is available on the local node, by an application program 16. The flowchart of Figure 3 assumes that any initialization calls which need to be made to the service director 12 have already been made. Figure 3 illustrates only the sequence of events which occur during a single call to a library procedure.

First, the application program 16 calls the stub procedure and passes parameters to it 70. These parameters, as described in connection with Figure 2, preferably identify at least a service and common block, and optionally a procedure identifier and parameters if required. The stub procedure then sets a calling language flag 72. This flag indicates to the service director 12 the programming language of the application program 16, thereby indicating which calling conventions are used by the application 16 and stub procedure 14.

The stub procedure then calls the service director 74, which determines if the request is for an internal service 76. If the requested procedure is not internal to the service director 12, the service director 12 locates the desired procedure in the service table 78. As described above, the service table entry indicates that information necessary for the service director 12 to properly call the requested library procedure. In the method of Figure 3, the service table entry indicates that the desired procedure is available on the local node.

The service director 12 then sets up the parameters to call the library procedure 80, and calls it 82. The service procedure executes in its normal manner 84, and returns any generated results to the service director 86.

The service director 12 sets up its return parameters 88 to match the calling convention of the application program 16 as indicated by the flag set in step 72. The results are then returned to the stub procedure 90, which in turn returns them to the application program 92.

In step 76, if the service director 12 detects that an internal service is requested, it executes such internal procedure 94 and goes to step 90. The service director 12 understands the parameter passing mechanism used by the application program 16 because of the calling language flag set in step 72, and can handle any required translation directly.

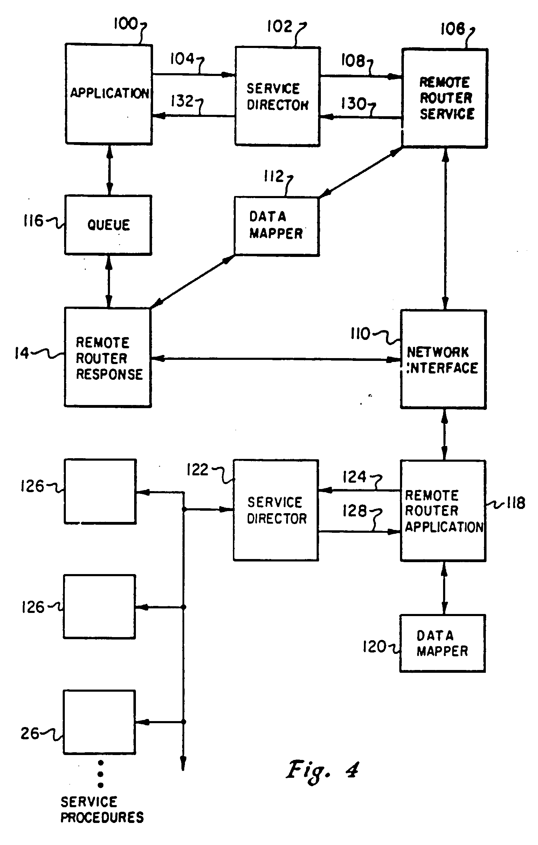

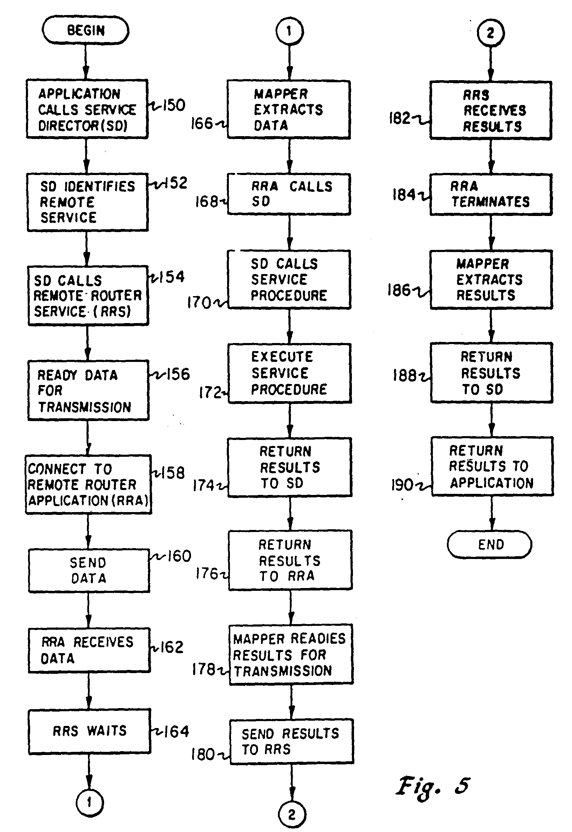

Figure 4 is a block diagram of an embodiment of the system in which an application running on one node of a network can call a service procedure on another node of the network. The system shown in Figure 4 can be used for operation in several different remote modes, which are separately set forth in the flowcharts of Figures 5-8. For ease of understanding, not all of the details shown and described in connection with Figure 1 are included in Figure 4, although a preferred embodiment uses the same techniques.

Referring to Figure 4, an application program 100 invokes a service director 102 through a procedure call 104. The service director 102 invokes a remote router service 106 with a procedure call 108. The remote router service 106 is a library procedure which sets up remote communication with a remote node connected to the local node through a network.

The remote router 106 communicates with a network interface 110 in order to transfer data and results over the network. The network interface 110 represents all of the hardware and software interfaces and connections necessary to connect 2 nodes in the network. Network architectures differ greatly from each other, and the details of network linkages do not form a part of the present invention, so details of the network interface 110 are not shown. The remote router service 106 also communicates with a data mapper 112, which controls formatting of messages transferred over the network. A remote router response procedure 114 communicates with the network interface 110 in selected situations. In these situations, the response procedure 114 receives results returned over the network from a remote node, and places them into a queue 116 for later retrieval by the application 100. The response procedure 114 communicates with the data mapper 112 in order to interpret the format of the returned results and reformat them into a form expected by the application 100.

At the remote node, a remote router application 118 receives data from the network interface 110. This data describes a service procedure which is to be invoked at the remote node. The remote router application procedure 118 communicates with a data mapper 120 at the remote node in order to extract the necessary information from the communication stream, and invokes a service director 122 with a procedure call 124. At the remote node, the remote router application procedure 118 calls the service director 122 as an application program, and requests the service director 122 to invoke a service procedure as described in connection with Figure 1. The service director 122 makes any calling convention translations which are necessary and invokes a requested service procedure 124.

When the requested procedure 124 terminates, it returns a result, if any, to the service director 122, which in turn returns the result to the application procedure 118 by a procedure return 128. The application procedure 118 communicates with the data mapper 120 to format the results for communication over the network, and returns them to the originating node through the network interface 110.

Depending on the calling method being used, the results returned by the application procedure 118 can be returned to the response procedure 114 for placement into the queue 116, or they can be returned directly to the remote router service procedure 106. In the latter case, the service procedure 106 returns the results to the service director with a procedure return 130, which in turn uses a procedure return 132 to return the results to the application 100.

The system described in connection with Figure 4 can use several different techniques for communicating between the various remote router procedures at the local and remote nodes. The remote service 126 can be invoked with a "synchronous" technique, meaning that the calling application waits until results are returned before proceeding. Remote services may also be invoked in an "asynchronous" manner, meaning that the application continues to perform further processing while the remote node invokes the service procedure, and fetches the results from the queue 116 after they have been placed there by the response procedure 114.

It is also possible to have the application procedure 110 initiate a new network connection each time a remote call is made, or a single connection can be set up for making several different remote calls. Making a new connection for each remote call generally requires more overhead for setting up the connection, but avoids having dedicated communication links on the network which are idle part of the time. The technique of opening a single communications link for several remote procedure invocations can be referred to as making a remote request with START/STOP.

As described above, the application 100 must initialize the service director 102. The service tables (not shown separately in Figure 4) identify the location of all of the service procedures which can be called by the application 100 including those which are invoked on remote nodes. For remote services, the remote node and any communications links to it must be identified, as well as the information which is necessary for the remote service director 122 to invoke the remote service 126. The communication protocols which are used to communicate with the remote node, as well as the parameters which are passed to remote procedures, are stored in the data mapper 112 so that it will know how to format and extract data for communications with the remote node. The remote data mapper 120 is given similar information when the remote router application procedure 118 is initialized in order to enable access to service procedures 126 from other nodes.

Figure 5 illustrates a synchronous remote request without START/STOP. Referring to Figure 5, the application procedure 100 calls the local service director 150, and passes parameters thereto as described in connection with Figure 2. The service director 102 searches its service tables and locates the entry for the requested service. For services which are defined as remote services, this fact is identified in the service tables 152. The service director 102 then invokes the remote router service 154.

As described above, a data mapper routine 112 was associated with each remote service in the service tables at the time the remote services were defined. The data mapper 112 readies the service identifier and parameters for transmission over the network 156 by creating communications blocks appropriate to the protocol used by the network. Only that information actually utilized at the remote node is transferred, so that some entries in the service name block 46 and common block 50 need not be transferred. The data mapper 112 also identifies which remote data mapper 120 should be used to correctly extract the transferred parameters.

A connection is made to open up a network communications link to the remote router application procedure 158. The data, which includes the service procedure to be invoked and all necessary parameters, is then sent over the network 160, and received by the remote router application procedure 162. Since this is a synchronous call, the remote router service 106 at the local node then waits until it receives a reply 164.

At the remote node, the remote router application 118 communicates with the data mapper 120 which extracts the data 166. Using the service call identifier and parameters extracted by the data mapper 120, the remote router application 118 invokes the service director 122 as does any other application 168. The service director 122 calls the appropriate service procedure 170, which executes in the normal manner 172. Upon completion, the selected service procedure 126 returns its results to the service director 174, which in turn returns its results to the remote router application 176.

The data mapper 120 then readies the results for communication over the network 178, and the remote router application 118 returns the results to the remote router service 180. Once the remote router service 106 has received the results 182, the remote router application 118 terminates 184. The data mapper 112 extracts the results 186 into a format understood by the service director 102, and returns them to the service director 188. Service director 102 then in turn returns these results to the application 190, which continues processing.

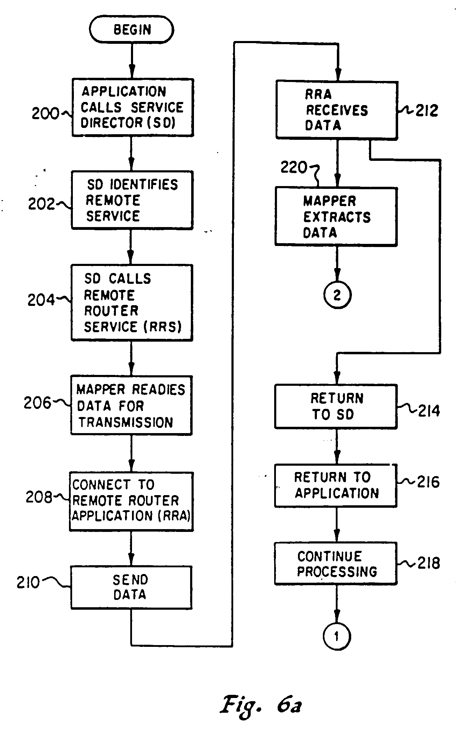

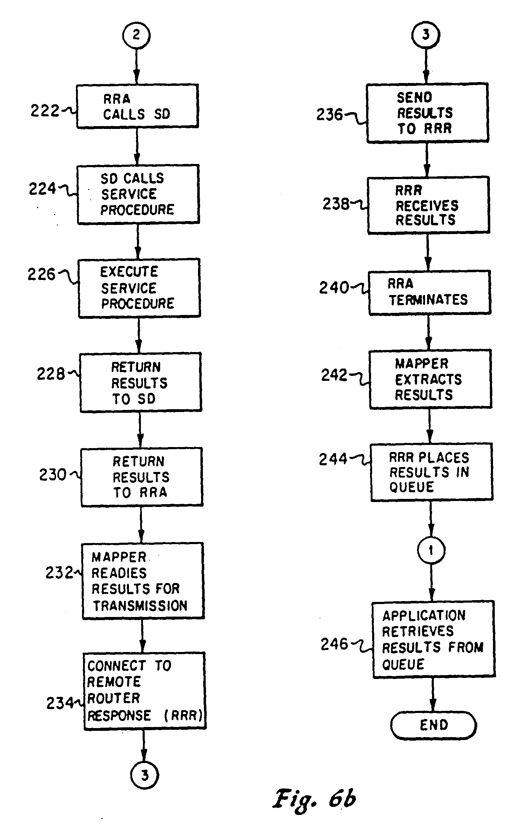

A preferred method for making an asynchronous remote request without START/STOP is shown in Figure 6. The application program calls the service director 200, which identifies the requested service procedure as a remote service in the service tables 202. The service director then calls the remote router service 204, which communicates with the data mapper in order to ready the service procedure identifier and parameters for transmission 206. A connection is then initiated to the remote node in order to establish a communications link 208, and the data describing the remote service procedure and its parameters is then sent to the remote node 210. When the remote router application at the remote node receives the data 212, the local remote router service executes a procedure return to the service director 214, which in turn executes a return to the calling application 216. The application then continues processing 218, and can check for returned results in the queue 116 at a later time.

When the remote router application 118 receives the service procedure and parameter data 212, the remote data mapper, which was identified by.the data mapper 112 at the local node, extracts the procedure identifier and parameters 220. The remote router application then, acting as any other application program, calls the service director 222, which calls the appropriate service procedure 224. The service procedure executes 226 and returns any results to the service director 228. The service director returns the results to the remote router application to 230, which formats them for transmission over the network by communicating with the mapper 232.

Since this was an asynchronous request, the results are not returned to the remote router service 106 at the local node which originally requested execution of the service procedure. Instead, when the data is sent (step 210) to the remote node, the transaction is identified as an asynchronous call, and a remote router response procedure 114 is identified to which the results should be returned.

Therefore, the remote router application 118 initiates a connection to the identified remote router response procedure 234. Once the connection is established, the results are sent to the response procedure 236. Once the response procedure 114 receives the results 238, the remote router application 118 terminates 240. The data mapper at the local node then extracts the results 242, and the response procedure places them into the queue 244. At some later time, the application program retrieves the results from the queue 246, and continues processing. If the results have not yet been placed in the queue 116 at the time the application program 100 tries to retrieve them 246, the application program can either wait until the results are available, or continue further processing and try again at a later time.

As described above, START/STOP transactions can be used to minimize the overhead required to set up the communications links between the local and remote nodes. In the methods described in connection with Figures 5 and 6, a new network communication link must be set up each time a remote service procedure 126 is invoked. If an application program 100 knows that multiple consecutive invocations of a single or related service procedures 126 will be made, it is more efficient to set up a single communications link between the nodes and utilize that link for several transactions.

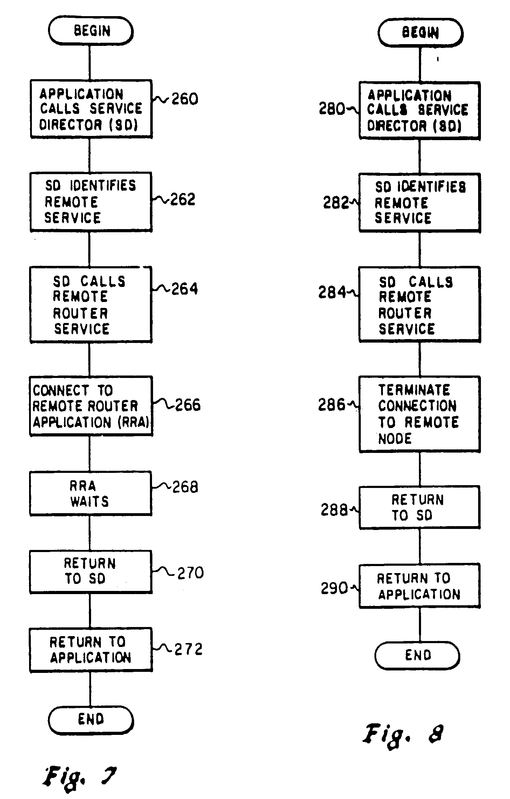

Figures 7 and 8 show a preferred method for initiating and terminating a series of START/STOP transactions. The applications program 100 initiates a series of START/STOP transactions, performs the transactions in a method very similar to that described above, and finally terminates the series.

Since the system described herein is transparent to the application program 100, it will often not be known whether a particular requested service procedure is performed locally or on a remote node. Therefore, an application program 100 can initiate and terminate a series of transactions as if they are remote service procedures. If the service director, through searching the service tables, determines that the requested service is actually locally available, the initiate and terminate commands for a series of transactions are simply ignored. Thus, an application program 100 can simply initiate and terminate a series of related requests in every instance, and whether or not a particular request is local or remote will have no adverse affect. In fact, a particular request may be locally available at some time, and remotely available at another time, and nothing will appear different to the application program. If an asynchronous request is made, the service director can merely return the results directly to the queue 116 instead of the application program 100.

Referring to Figure 7, a preferred method for initiating a series of related transactions as shown. The application program 100 calls the service director 102 to request that a START/STOP series be initiated 260. The service procedure 126 which will be called during this series is identified at this time. The service director 102 identifies the requested service procedure as a remote service 262, and invokes the remote router service 106 with a procedure call 264. As described above, if the requested service procedure is available at the local node, the remainder of the steps of Figure 7 are simply ignored.

The remote router service 106 initiates a connection to the remote router application procedure 266. the remote router application procedure 118 then waits to receive data 268, and the remote router service 106 of the local node returns to the service director 270. The service director 102 then turns to the application program 272 and the process is complete. At this time, a communications link has been established over the network, and does not need to be reestablished in order to send a request to the remote node.

Referring to Figure 8, when a START/STOP series is completed, the application program 100 calls the service director 102 to terminate the communication link 280. The service director 102 identifies the service procedure as a remote service 282, and calls the remote router service 284. As is the case with initiating the START/STOP link, if the identified service procedure is available locally the command to terminate the link is simply ignored.

The remote router service 106 then communicates to the remote router application 118 that the START/STOP link is being terminated, and terminates the network connection to the remote node 286. The remote router service 106 then returns to the service director 288, which in turn returns to the application 290.

The method used for invoking a remote service procedure 106 after a START/STOP series has been requested is virtually identical to that used without START/STOP. Instead of initiating and terminating connections, the available connection is used. For a synchronous request, the steps shown in Figure 5 are the same, except that step 158 is eliminated, and step 184 does not terminate the remote router application 118, but instead causes it to wait for a next request. The remaining steps are the same.

For an asynchronous request with START/STOP, the flowchart shown in Figure 6 indicates the appropriate steps with a few exceptions. The connection steps 208 and 234 are eliminated, and termination step 240 instead becomes a wait for next request step for the remote router application 118.

Thus, the same system can be used for requests with or without START/STOP, with the difference that a flag is needed to indicate what kind of transaction is required. The extra initiation and termination procedures must also be used when START/STOP requests are made.

The system and method described above allow library procedures to be invoked on remote nodes over a network. The location of the library procedures need not be known to the applications programs, and can in fact change from time to time. The languages used to write the library procedures can also be changed, as it need not match those of the applications program.

Thus, a single set of library routines can be supplied to support all machines connected to a network. Applications programs can be written to access the library procedures through a language independent interface, and it does not matter if the library procedures they require are located on the local node or elsewhere. This allows library procedures which operate more efficiently on certain machines, such as vector operations using specialized hardware, to run on the more efficient machines.

## Claims

1. A method for calling a service procedure residing at either a local node or a remote node of a computer network from an application program executing on the local node, the method comprising the steps of:
generating an initialization call (74) to a service direction (12) in passing parameters identifying the calling application
- selecting service directories (20) by means of said parameters for determining :
a - the location of the desired library procedures;
b - the parameters required by said library procedures; and
c - the language of said procedures ;
generating a procedure call (70) upon execution of a native language construct, the procedure call including a parameter set;
responsive to the procedure call, determining (76) the local or remote node where the service procedure resides from said service directory, a service procedure identifier and which calling conventions are used by the application program;
determining if the application program and the service procedure use different calling conventions;
responsive to the respective languages of the application program and the service procedure utilizing different calling conventions, reformatting (80) said parameter set for the service procedure;
upon determination that the service procedure is located at the local node, calling the service procedure (94) and passing the parameter set hereto;
upon determination that the service procedure is located on the remote node, calling a routing procedure on the local node from the service directory with the service procedure identifier and the parameter set;
calling a routing procedure on the remote node from the local node routing procedure with the service procedure identifier and the parameter set;
at the remote node, calling (82) the service procedure on the remote node corresponding to the service procedure identifier; and
executing (84) the service procedure at the remote or local node, as appropriate, utilizing the parameter set.

2. The method of claim 1, further comprising the steps of:
upon completion of execution, returning (86) a result parameter set from the service procedure to the local node routing procedure;
formatting (88) the result parameter set for the application program; and
returning (92) the result parameter set to the application program.

3. The method of claim 2 wherein said step for returning the result parameter set to the application program comprises the steps of:
placing the result parameter set in a queue (116) accessible by the application program; and
reading the result parameter set from the queue into the application program.

4. A computer network for processing procedure calls, the computer network comprising a local and one or a plurality of remote nodes and characterized in that it comprises:
computer means located at the local node for executing an application program and thereby, generating an initialization call (74) to a service director (12) by passing parameters identifying the calling application program, and a procedure call in a native language construct for calling a procedure stored at the local node or at one of said plurality of remote nodes and passing a parameter set;
means located at the local node responsive to the initialization call for,
- selecting service directories (20) by means of said parameters for determining :
a - the location of the desired library procedures;
b - the parameters required by said library procedures; and
c - the language of said procedures ;
means located at the local node responsive to a procedure call for generating a procedure identifier, for identifying the language of the application, for determining from the selected mappings and the identification of the procedure whether it is located at the local or at the remote node and, responsive to the calling conventions of the application and the called procedure, for tranlating the parameter set into one compatible with the call procedure;
means located at the local node responsive to determination that the procedure is located at the remote node for initiating establishment of a communications session between the local node and the remote node and passing the procedure identifier for the called procedure and the parameter set to the remote node during the communications session;
means located at the remote node responsive to establishment of the communications session and receipt of said compatible parameter set and identification of the procedure during the communications session for generating a procedure call for the called procedure;
means located at the remote node for executing the call procedure utilizing the parameter set; and,
means located at the remote node for returning a result parameter set generated by the procedure to the local node.

5. The computer network of claim 4 characterized in that:
the means for returning the result parameter set to the local node does so during the communications session; and means for returning the result parameter set translates the result parameter set to a parameter set compatible with the conventions of the calling procedure and returns the result parameter set to the local node.

6. The computer network of claim 5 characterized in that:
the procedure call responsive means at the local node include a first interface callable by the application program in a predetermined format, wherein said first interface calls the communications session initiating means; and
the means for returning results include a second interface in a second predetermined format, wherein said second interface calls a procedure identifier received during the communications session.

7. The computer network of claim 4, 5 or 6 characterized in that it further comprises:
queue means located at the local node for holding the result parameter set returned from the remote node for later availability to the application program.

8. The computer network of anyone of claims 4 to 7 characterized in that:
the result parameter set returned from said remote node is returned to the application program by said procedure indicating means.

## Patentansprüche

1. Ein Verfahren zum Aufruf einer Dienstprozedur, die entweder in einem örtlichen Knoten oder in einem Fernknoten eines Rechnernetzwerks resident ist, von einem Anwendungsprogramm aus, das im örtlichen Knoten abgearbeitet wird, wobei das Verfahren die folgenden Schritte beinhaltet:
Generieren eines Initialisierungsaufrufs (74) an einen Dienstprogramm-Direktor (12) mit Übergeben von Parametern, die die Aufrufanwendung initialisieren,
- durch Anwahl von Dienstverzeichnissen (20) mittels dieser Parameter zum Bestimmen
a- des Orts der gewünschten Bibliothekprozedur;
b- der Parameter, die von diesen Bibliothekprozeduren benötigt werden; und
c- der Sprache dieser Prozeduren;
Generieren eines Prozeduraufrufs (70) beim Ausführen einer ursprünglichen Sprachenkonstruktion, wobei der Prozeduraufruf einen Parametersatz enthält;
als Reaktion auf den Prozeduraufruf, Bestimmen (76) des örtlichen Knotens bzw. des Fernknotens, in dem die Dienstprozedur resident ist, aus dem Dienstverzeichnis, eines Dienstprozedur-Identifikators, und welche Aufrufkonventionen vom Anwendungsprogramm benutzt werden;
Bestimmen, ob das Anwendungsprogramm und die Dienstprozedur unterschiedliche Aufrufkonventionen benutzen;
als Reaktion auf die entsprechenden Sprachen des Anwendungsprogramms und auf das Benutzen unterschiedlicher Aufrufkonventionen durch die Dienstprozedur, Umformatieren (80) des Parametersatzes für die Dienstprozedur;
bei Bestimmen, daß die Dienstprozedur im örtlichen Knoten sitzt, Aufruf der Dienstprozedur (94) und Übergabe des entsprechenden Parametersatzes;
bei Bestimmen, daß die Dienstprozedur im Fernknoten sitzt, Aufruf einer Router-Prozedur im örtlichen Knoten vom Dienstverzeichnis aus mit dem Dienstprozedur-Identifikator und dem Parametersatz;
Aufruf einer Routerprozedur am Fernknoten von der Router-prozedur des örtlichen Knotens mit dem Dienstprozedur-Identifikator und dem Parametersatz;
am Fernknoten, Aufruf (82) der Dienstprozedur im Fernknoten entsprechend dem Dienstprozedur-Identifikator; und
Abarbeiten (84) der Dienstprozedur im Fernknoten bzw. im örtlichen Knoten unter Verwendung des Parametersatzes.

2. Das Verfahren gemäß Anspruch 1, das ferner die folgenden Schritte beinhaltet:
Bei Abschluß der Abarbeitung, Rückgabe (86) eines Ergebnisparametersatzes von der Dienstprozedur an die Router-prozedur des örtlichen Knotens;
Formatieren (88) des Ergebnisparametersatzes für das Anwendungsprogramm; und
Rückgabe (92) des Ergebnisparametersatzes an das Anwendungsprogramm.

3. Das Verfahren gemäß Anspruch 2, in dem der Schritt der Rückgabe des Ergebnisparametersatzes an das aufrufende Programm die folgenden Schritte beinhaltet:
Setzen des Ergebnisparametersatzes in eine Warteschlange (116), auf sie vom Anwendungsprogramm zugegriffen werden kann; und
Lesen des Ergebnisparametersatzes aus einer Warteschlange in das Anwenderprogramm.

4. Ein Rechnernetzwerk zum Bearbeiten von Prozeduraufrufen, wobei das Rechnernetzwerk beinhaltet einen örtlichen und einen oder eine Vielzahl von Fernknoten, und dadurch gekennzeichnet ist, daß es beinhaltet:
Rechnermittel, die am örtlichen Knoten sitzen, zur Durchführung eines Anwendungsprogramms und dadurch Generieren eines Initialisierungsaufrufs an einen Dienstprogramm-Direktor (12) durch Übergabe von Parametern, die das aufrufende Anwendungsprogramm identifizieren, sowie eines Verfahrensaufrufs in einer ursprünglichen Sprachkonstruktion zum Aufrufen eines Verfahrens, das am örtlichen Knoten oder an einem dieser Vielzahl entfernter Knoten gespeichert ist, und Übergeben eines Parametersatzes;
Mittel, die im örtlichen Knoten sitzen und die ansprechen auf den Initialisierungsaufruf
- zum Anwählen von Dienstverzeichnissen (20) mittels dieser Parameter zum Bestimmen
a- des Orts der gewünschten Bibliothekprozedur;
b- der Parameter, die von diesen Bibliothekprozeduren benötigt werden; und
c- der Sprache dieser Prozeduren;
im örtlichen Knoten sitzender Mittel, die auf einen Prozeduraufruf ansprechen zum Generieren eines Prozedur-Identifikators, zum Identifizieren der Sprache der Anwendung, zum Festlegen aus den ausgewählten Abbildungen und der Identifizierung der Prozedur, ob sie im örtlichen oder im Fernknoten sitzt, und die ansprechen auf den Aufruf der Konventionen der Anwendung und der aufgerufenen Prozedur zum Übersetzen des Parametersatzes in eine Sprache, die mit der Aufrufprozedur kompatibel ist;
im örtlichen Knoten residente Mittel, die auf das Feststellen ansprechen, daß die Prozedur zum Initialisieren des Aufbaus einer Kommunikationssitzung zwischen dem örtlichen Knoten und dem Fernknoten im Fernknoten resident ist und Übergeben des Prozedur-Identifikators für die aufgerufenen Prozedur und des Parametersatzes während der Kommunikationssitzung an den Fernknoten;
im Fernknoten residente Mittel, die auf den Aufbau der Kommunikationssitzung ansprechen, und Aufnahme des kompatiblen Parametersatzes und Identifizierung der Prozedur bei der Kommunikationssitzung zum Generieren eines Prozeduraufrufs für die aufgerufene Prozedur;
im Fernknoten residente Mittel zur Abarbeitung der Aufrufprozedur unter Verwendung des Parametersatzes; und
im Fernknoten residente Mittel zur Rückgabe des von der Prozedur generierten Ergebnisparametersatzes an den örtlichen Knoten.

5. Das Rechnernetzwerk gemäß Anspruch 4, dadurch gekennzeichnet, daß
die Mittel zum Zurückgeben des Ergebnisparametersatzes an den örtlichen Knoten das während der Kommunikationssitzung ausführen; und die Mittel zum Zurückgeben des Ergebnisparametersatzes den Ergebnisparametersatz in einen Parametersatz übersetzen, der mit den Konventionen der Aufrufprozedur kompatibel ist und den Ergebnisparametersatz an den örtlichen Knoten zurückgibt.

6. Das Rechnernetzwerk gemäß Anspruch 5, dadurch gekennzeichnet, daß
die auf den Prozeduraufruf ansprechenden Mittel im örtlichen Knoten eine erste, durch das Anwendungsprogramm aufrufbare Schnittstelle in einem vorgegebenen Format aufweisen, in der diese erste Schnittstelle die Kommunikationssitzungs-Initiierungsmittel aufruft; und
die Mittel zur Zurückgabe der Ergebnisse eine zweite Schnittstelle in einem zweiten, vorgegebenen Format aufweisen, in der diese zweite Schnittstelle einen Prozedur-Identifikator aufruft, der während der Kommunikationssitzung aufgenommen wurde.

7. Das Rechnernetzwerk gemäß Anspruch 4, 5 oder 6, dadurch gekennzeichnet, daß es ferner aufweist:
Im örtlichen Knoten residente Warteschlangenmittel zum Halten des Ergebnisparametersatzes, der vom Fernknoten zurückgegeben wird, zur späteren Verfügung für das Anwendungsprogramm.

8. Das Rechnernetzwerk eines beliebigen der Ansprüche 4 bis 7, dadurch gekennzeichnet, daß
der vom Fernknoten zurückgegebene Ergebnisparametersatz durch das prozedurangebende Mittel an das Anwendungsprogramm zurückgegeben wird.

## Revendications

1. Procédé pour l'appel d'une procédure de service résidant soit à un noeud local soit à un noeud à distance d'un réseau de calculateurs à partir d'un programme d'application exécutant sur le noeud local, le procédé comprenant les étapes de:
engendrer un appel d'initialisation (74) sur un programme de contrôle de service (12) en faisant passer des paramètres identifiant l'application d'appel;
sélectionner des répertoires de services (20) au moyen desdits paramètres pour déterminer:
a- l'emplacement des procédures de bibliothèque requises;
b- les paramètres requis par lesdites procédures de bibliothèque; et
c- le langage desdites procédures;
engendrer un appel de procédure (70) lors de l'exécution d'une construction de langage spécifique, l'appel de procédure comprenant un ensemble de paramètres;
en réponse à l'appel de procédure, déterminer (76) le noeud local ou à distance où réside la procédure de service dans ledit répertoire de services, un identificateur de procédure de service et quelles sont les conventions d'appel qui sont utilisées par le programme d'application;
déterminer si le programme d'application et la procédure de service utilisent des conventions d'appel différentes;
en réponse aux langages respectifs du programme d'application et à la procédure de service utilisant des conventions d'appel différentes, reformater (80) ledit ensemble de paramètres pour la procédure de service;
Lors de la détermination que la procédure de service est placée au noeud local, appeler la procédure de service (94) et lui passer l'ensemble de paramètres;
lors de la détermination que la procédure de service est placée sur le noeud à distance, appeler une procédure d'acheminement sur le noeud local à partir du répertoire de services avec l'identificateur de procédure de service et l'ensemble de paramètres;
appeler une procédure d'acheminement sur le noeud à distance à partir de la procédure d'acheminement de noeud local avec l'identificateur de procédure de service et l'ensemble de paramètres;
au noeud à distance, appeler (82) la procédure de service sur le noeud à distance correspondant à l'identificateur de procédure de service; et
exécuter (84) la procédure de service au noeud à distance ou local, suivant le cas, en utilisant l'ensemble de paramètres.

2. Procédé selon la revendication 1, comprenant en outre les étapes de:
à l'accomplissement de l'exécution, retourner (86) un ensemble de paramètres de résultat depuis la procédure de service jusqu'à la procédure d'acheminement de noeud local;
formater (88) l'ensemble de paramètres de résultat pour le programme d'application; et
retourner (92) l'ensemble de paramètres de résultat au programme d'application.

3. Procédé selon la revendication 2, dans lequel ladite étape de retourner l'ensemble de paramètres de résultat au programme d'application, comprend les étapes de:
placer l'ensemble de paramètres de résultat dans une file d'attente accessible par le programme d'application; et
lire l'ensemble de paramètres de résultat dans la file d'attente et les introduire dans le programme d'application.

4. Réseau de calculateurs pour traiter des appels de procédure, le réseau de calculateurs comprenant un noeud local et un ou une pluralité de noeuds à distance, et étant caractérisé en ce qu'il comprend:
des moyens informatiques placés au noeud local pour exécuter un programme d'application et, de ce fait, engendrer un appel d'initialisation (74) sur un programme de contrôle de service (12) en passant des paramètres identifiant le programme d'application d'appel, et un appel de procédure dans une construction de langage spécifique pour appeler une procédure emmagasinée au noeud local ou à un de ladite pluralité de noeuds à distance, et passer un ensemble de paramètres;
des moyens placés au noeud local sensibles à l'appel d'initialisation, pour:
- sélectionner des répertoires de services (20) au moyen desdits paramètres pour déterminer:
a- l'emplacement des procédures de bibliothèque requises;
b- les paramètres requis par lesdites procédures de bibliothèque; et
c- le langage desdites procédures;
des moyens placés au noeud local sensibles à un appel de procédure pour engendrer un identificateur de procédure, pour identifier le langage de l'application, pour déterminer à partir des mappages sélectionnés et de l'identification de la procédure si celle-ci est placée au noeud local ou à distance et, en réponse aux conventions d'appel de l'application et à la procédure appelée, pour traduire l'ensemble de paramètres en un ensemble compatible avec la procédure d'appel;
des moyens placés au noeud local sensibles à la détermination que la procédure est placée au noeud à distance, pour initialiser l'établissement d'une session de communications entre le noeud local et le noeud à distance, et passer l'identificateur de procédure pour la procédure appelée et l'ensemble de paramètres sur le noeud à distance durant la session de communications;
des moyens placés au noeud à distance sensibles à l'établissement de la session de communications et à la réception dudit ensemble de paramètres compatible et à l'identification de la procédure durant la session de communications, pour engendrer un appel de procédure pour la procédure appelée;
des moyens placés au noeud à distance pour exécuter la procédure d'appel utilisant l'ensemble de paramètres; et
des moyens placés au noeud à distance pour retourner un ensemble de paramètres de résultat engendré par la procédure sur le noeud local.

5. Réseau de calculateurs selon la revendications 4, caractérisé en ce que:
les moyens pour retourner l'ensemble de paramètres de résultat au noeud local procèdent ainsi durant la session de communications; et des moyens pour retourner l'ensemble de paramètres de résultat traduisent l'ensemble de paramètres de résultat compatible avec les conventions de la procédure d'appel et retournent l'ensemble de paramètres de résultats sur le noeud local.

6. Réseau de calculateurs selon la revendication 5, caractérisé en ce que:
les moyens sensibles à l'appel de procédure au noeud local comprennent une première interface qui peut être appelée par le programme d'application dans un format prédéterminé, dans lesquels ladite première interface appelle les moyens d'initialisation de session de communications; et
les moyens pour retourner les résultats comprennent une deuxième interface dans un deuxième format prédéterminé, dans lesquels ladite deuxième interface appelle un identificateur de procédure reçu durant la session de communications.

7. Réseau de calculateurs selon les revendications 4, 5 ou 6, caractérisé en ce qu'il comprend en outre:
des moyens de file d'attente placés au noeud local pour maintenir l'ensemble de paramètres de résultat retourné à partir du noeud à distance, en vue d'une disponibilité ultérieure au programme d'application.

8. Réseau de calculateurs selon l'une quelconque des revendications 4 à 7, caractérisé en ce que:
l'ensemble de paramètres de résultat retourné à partir du noeud à distance est retourné sur le programme d'application par lesdits moyens d'indication de procédure.
